(19) Europäisches Patentamt
European Patent Office
Office européen des brevets

(11) **EP 4 135 430 A1**

(12) **EUROPEAN PATENT APPLICATION**

(43) Date of publication:
**15.02.2023 Bulletin 2023/07**

(21) Application number: **21190969.2**

(22) Date of filing: **12.08.2021**

(51) International Patent Classification (IPC):
**H04W 68/00** (2009.01)     **H04W 76/28** (2018.01)

(52) Cooperative Patent Classification (CPC):
**H04W 68/005;** H04W 76/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **BELLING, Horst Thomas
  85435 Erding (DE)**
• **GODIN, Philippe
  78000 Versailles (FR)**
• **NASSAR, Mohamed Amin
  81477 Munich (DE)**

(74) Representative: **Nokia EPO representatives
Nokia Technologies Oy
Karakaari 7
02610 Espoo (FI)**

(54) **DOWNLINK MULTICAST SERVICE TRANSMISSION**

(57)     According to an example aspect of the present invention, there is provided a method, comprising receiving discontinuous reception cycle length associated with a multicast session, defining a paging frame dedicated for the multicast session on the basis of the received discontinuous reception cycle length and an identifier of the multicast session, and receiving a paging message for the multicast session in the defined paging frame.

FIG. 2A

**Description**

FIELD

The present disclosure relates to arranging downlink transmission of a multicast service data and a discontinuous reception of such.

BACKGROUND

Network may provide the same service and a selected content data simultaneously to a number of user equipments, UEs. In broadcast service the same service and the selected content data are provided to all UEs in a geographical coverage area that are authorized to receive the service and content. In multicast service the same service and the selected content data are provided to a dedicated set of UEs.

SUMMARY

According to some aspects, there is provided the subject matter of the independent claims. Some embodiments for some or all of the aspects are defined in the dependent claims.

According to a first aspect of the present disclosure, there is provided a method for a wireless communication device, comprising receiving discontinuous reception cycle length associated with a multicast session, defining a paging frame dedicated for the multicast session on the basis of the received discontinuous reception cycle length and an identifier of the multicast session, and receiving a paging message for the multicast session in the defined paging frame.

According to a second aspect of the present disclosure, there is provided a method for an access and mobility management function, comprising receiving discontinuous reception cycle length associated with a multicast session and an identifier of the multicast session, defining a paging frame dedicated for the multicast session on the basis of the received discontinuous reception cycle length and the received identifier of the multicast session, and requesting transmission of a paging message for the multicast session in the defined paging frame.

According to a third aspect of the present disclosure, there is provided a method for an application function, comprising defining a multicast session configuration including a multicast session identifier and discontinuous reception cycle length, transmitting the session configuration to a network entity and/or as a service announcement for the multicast session, transmitting an activation request to a multicast broadcast session management function to request activation of the multicast session, and starting to transmit data of the multicast session after elapse of the discontinuous reception cycle length after requesting the activation of the multicast session.

According to a fourth aspect of the present disclosure, there is provided a method for a session management function, comprising retrieving a multicast session configuration for a multicast session upon receiving a join request for the multicast session from a user equipment, receiving, as part of the multicast session configuration, a discontinuous reception cycle length, storing information about the user equipment participating in the multicast session and the discontinuous reception cycle length for the multicast session, and transmitting the discontinuous reception cycle length as a reply to the join request to the user equipment.

According to a fifth aspect of the present disclosure, there is provided a method for a multicast broadcast session management function, com multicast ng receiving a multicast session configuration including a multicast session identifier and discontinuous reception cycle length, storing the multicast session configuration including the multicast session identifier and the discontinuous reception cycle length, receiving a request from one or more session management functions for information about the multicst session, and transmitting the discontinuous reception cycle length to the one or more session management functions in response to the received request.

According to some further aspects, there is provided an apparatus, comprising means for, or configured for, performing for performing the method of the first aspect or the second aspect, or an embodiment thereof. The means may comprise one or more processors and memory comprising instructions, when executed by the one or more processors, cause the apparatus to perform the method of one of the aspects, or an embodiment thereof. Some embodiments for the apparatus are illustrated in the dependent claims. The embodiments may be applied also for other claim categories or aspects with similar functionality.

According to further aspects, there is provided an apparatus, comprising one or more processors and memory comprising instructions, when executed by the one or more processors, cause the apparatus for performing the method of one of the aspects, or an embodiment thereof.

According to a some further aspects of the present disclosure, there is provided a non-transitory computer readable medium, a computer program, or a computer program product, having stored thereon a set of computer readable instructions that, when executed by at least one processor, cause an apparatus at least to perform the method of one of the aspects, or an embodiment thereof.

BRIEF DESCRIPTION OF THE DRAWINGS

FIGURE 1 illustrates an example system in accordance with at least some embodiments.

FIGURES 2A and 2B illustrate signalling examples in accordance with at least some embodiments.

FIGURE 3 illustrates an example apparatus capable of supporting at least some embodiments.

FIGURES 4A to 4E illustrate flow graphs of methods in accordance with at least some embodiments.

EMBODIMENTS

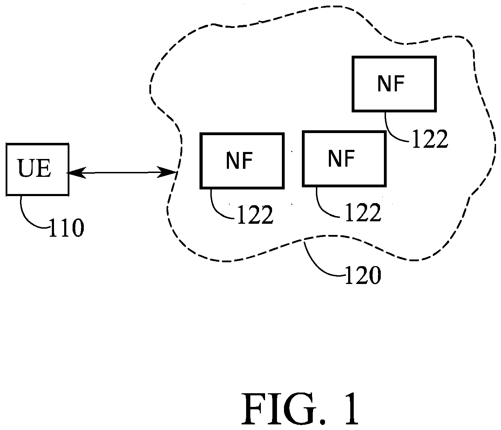

Fig. 1 shows an example system in accordance with at least some embodiments. The system comprises a user equipment, UE, 110 and a communication network 120. The UE 110 is able to receive data from or via the communication network 120 via point-to-multipoint, PTM, and point-to-point, PTP, connection.

The communication network 120 may be a public land mobile network, PLMN, or a non-public network, NPN, for example as defined in third generation partnership project, 3GPP, standardization specification TS23.501. A NPN may be a standalone NPN, SNPN, or Public Network Integrated NPN, PNI-NPN. The communication network 120 may be a non-3GPP network, for example a cable network, a network based on a wireless network protocols based on IEEE 802.11, Wi-Fi, or a Wireless Local Area Network, WLAN. The communication network 120 or a radio access may be based on long term evolution advanced, LTE Advanced, LTE-A, or new radio, NR, also known as fifth generation, 5G, without restricting the embodiments to such an architecture, however. Embodiments may also be applied to other kinds of communications networks having suitable means by adjusting parameters and procedures appropriately. Some examples of other options for suitable systems and radio access networks, RANs, are the universal mobile telecommunications system (UMTS) radio access network (UTRAN or E-UTRAN), long term evolution (LTE, the same as E-UTRA), worldwide interoperability for microwave access (WiMAX), Bluetooth®, personal communications services (PCS), Zig-Bee®, wideband code division multiple access (WCDMA), systems using ultra-wideband (UWB) technology, sensor networks, mobile ad-hoc networks (MANETs) and Internet Protocol multimedia subsystems (IMS) or a combination thereof.

A non-3GPP access, for example a WLAN access may be arranged via non-3GPP interworking function, N3IWF. A N3IWF is configured to provide an access point to the 5G core network (5GC) outside the 5G radio access network, RAN. A N3IWF is configured to route messages outside the 5G RAN, of non-3GPP networks, over Internet Protocol, IP, security tunnels. The AMF of the 5G core network is configured to implement non-access-stratum, NAS, security, e.g. ciphering and integrity protection algorithms.

In Fig. 1 a user equipment, UE, 110 comprises a mobile equipment including wireless mobile communication device operating with or without a subscriber identity module, SIM. The subscriber identifier may comprise a subscriber identity module, SIM, a universal subscriber identity module, USIM, or any corresponding subscriber identifier, for example an executable or a programmable identifier. A subscriber identifier enables subscriber identification, for example for authentication between the UE and a network. A user equipment may include, but is not limited to, a smartphone, a cellular phone, a laptop computer, a tablet computer, a machine-to-machine node, M2M node, a machine-type-communication node, MTC node, a massive machine-type-communication node, mMTC node, an internet-of-things node, IoT node, a car telemetry unit, or any terminal or entity enabling wireless communication or access to a wireless network. A UE may be a device using a wireless modem (alarm or measurement device, etc.), laptop and/or touch screen computer, tablet, game console, notebook, and multimedia device. A UE may be a device having capability to operate in Internet of Things (IoT) network which is a scenario in which objects are provided with the ability to transfer data over a network without requiring human-to-human or human-to-computer interaction.

5G enables using multiple input - multiple output (MIMO) technology at both UE and network side, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 7GHz, cmWave and mmWave, and also being integratable with existing legacy radio access technologies, such as the LTE. Below 7GHz frequency range may be called as FR1, and above 24GHz (or more exactly 24- 52.6 GHz) as FR2, respectively. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 7GHz - cmWave, below 7GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite in a constellation may cover several satellite-enabled network entities that create on-ground cells. The on-ground cells may be created through an on-ground relay node or by a gNB located on-ground or in a satellite.

In Fig. 1 the communication network 120 is equipped with one or more network functions, NF, 122. A network function may refer to an operational and/or a physical entity. A network function may be a specific network node or element, or a specific function or set of functions carried out by one or more entities, such as virtualized network elements, VNFs. One physical node may be configured to perform plural NFs. Examples of such network functions include a resource control or management function, session management or control function, interworking, data management or storage function, authentication function or a combination of two or more of these functions.

In case of 3GPP 5G system service based architecture, SBA, core network, NFs may comprise at least some of an access and mobility management function, AMF, a session management function, SMF, a network slice selection function, NSSF, a network exposure function, NEF, a network repository function, NRF, a unified data management, UDM, a unified data repository, UDR, an authentication server function, AUSF, a policy control function, PCF, and an application function, AF. A NEF is configured to provide access to exposed network services and capabilities. A UDM is configured to manage network user data in a single, centralized element. A UDM is configured to host functions related to data management, such as an authentication credential repository and processing function, ARPF, which is configured to select an authentication method based on a subscriber identity and configured policy. A UDR facilitates the share and the provisioning of subscriber-related data throughout services of a 3GPP system.

The communication network 120 may further comprise a security edge protection proxy, SEPP, configured to operate as a security edge node or gateway. The NFs may communicate with each other using representational state transfer, REST, application programming interfaces, for example. These may be known as RESTful APIs. Further examples of NFs include NFs related to gaming, streaming or industrial process control. The system may comprise also nodes from 3G or 4G node systems, such as home subscriber server, HSS, and a suitable interworking function for protocol translations between e.g. Diameter and JSON-based RESTful APIs. While described herein primarily using terminology of 5G systems, the principles as described herein are applicable also to other communication networks, such as 4G networks and non-3GPP networks, for example.

While the example of Fig. 1 has one communication network, 120, two or more networks may be present. In case of multi-networks, in Fig 1, the SEPP is a network node at the boundary of an operator's network that may be configured to receive a message, such as an Hypertext Transfer Protocol, HTTP, request or HTTP response from an NF, to apply protection for sending and to forward the thus reformatted message through a chain of intermediate nodes, such as IP eXchanges, IPX, towards a receiving SEPP. The receiving SEPP receives a message sent by the sending SEPP and forwards the message towards an NF within its operator's network, e.g. the AUSF.

A physical link from a user device to a network node is called uplink, UL, or reverse link and the physical link from the network node to the user device is called downlink, DL, or forward link. Network nodes or their functionalities may be implemented by using any node, host, server or access point etc. entity suitable for such a usage. A communications system typically comprises more than one network node in which case the network nodes may also be configured to communicate with one another over links, wired or wireless, designed for the purpose. These links may be used for signalling purposes. A RAN network node is a computing device configured to control the radio resources of the communication system it is coupled to. The network node may also be referred to as a base station (BS), an access point or any other type of interfacing device including a relay station capable of operating in a wireless environment. The network node includes or is coupled to transceivers. From the transceivers of the network node, a connection is provided to an antenna unit that establishes bi-directional radio links to user devices. The antenna unit may comprise a plurality of antennas or antenna elements. The network node is further connected to core network, CN, or next generation core, NGC. Depending on the system, the counterpart on the CN side can be a serving gateway, S-GW, routing and forwarding user data packets, packet data network gateway, P-GW, for providing connectivity of user devices, UEs, to external packet data networks, or mobile management entity, MME, etc.

A multicast broadcast service, referred in 3GPP based systems also to as Multicast/Broadcast Service, MBS, may refer generally to a point-to-multipoint service configured to provide the same service and a specific content simultaneously to a number of UEs, by broadcast or multicast type communication. MBS may include a multimedia broadcast multicast service, MBMS. MBMS may refer to a point-to-multipoint interface specification for existing and upcoming 3GPP cellular networks, which is designated to provide delivery of broadcast and multicast services, both within a cell as well within the core network. The specification is referred to as evolved multimedia broadcast multicast service, eMBMS, or LTE broadcast, when transmissions are delivered through an LTE network. 5G CN is configured to receive a single copy of MBS data packets and to deliver, in PTP, separate copies of the MBS data packets to individual UEs via UE-specific PDU sessions. In PTP, each UE is associated to MBS session via a PDU session. In case of PTM, 5G CN is configured to receive a single copy of MBS data packets and to deliver a single copy of the MBS data packets to RAN node.

Service announcement is a mechanism to distribute information to UEs about one or several available multicast broadcast services.

In a multicast communication service, a distributed service announcement includes information about the service required for service reception, such as IP multicast address(es) and optionally other service related parameters. A UE joins a session by indicating to a 5GC that the UE wants to receive multicast data. The session may be identified by a multicast session ID as distributed in the service announcement. The UE session join request for joining the session may trigger a session establishment, where transmission resources are established for transferring DL multicast data between the 5GC and the NG RAN. After the session has been established, the multicast data is transmitted to the UE, and other UEs that have been authorized to receive the multicast content. After the data has been transmitted and/or the multicast session period expired, the UE sends a session leave message and leaves the multicast session. After there is no need to transfer multicast data, resource in 5GC and the multicast session are released. A multicast MBS session requires the 5GC to authorize the UE based on authorization information, for example preconfigured or provided by the AF. UE authorization for a specific multicast MBS session may be performed via a service announcement, for example.

In broadcast communication service, a distributed service announcement includes information about the service required for service reception, such as IP multicast or broadcast address(es) and optionally other service related parameters. A session is established for enabling DL broadcast between a 5GC and a NG RAN. After that, data is broadcast over air interface. After the data has been transferred and/or there is no more need to transmit broadcast data, the session and 5GC resources are released.

In order to arrange an MBS session, a UE is configured to perform reception of MBS data. The MBS data may be transferred to the UE via established point-to-multipoint, PTM, or point-to-point, PTP, connection. A UE is configured to perform signalling for joining and leaving a MBS session.

A RAN is configured to control switching between PTM and PTP delivery per UE. A RAN is configured to support a MBS sessions during a handover. A NG RAN is configured to deliver data packets from 5G shared for multiple UEs over radio using PTM and/or PTP, and to control a switch between PTM/PTP deliver per UE. A NG RAN is configured to support MBS session continuity by driving handovers, and to support notification of MBS session activation over radio interface.

An AMF is configured to select a SMF with MBS capabilities. A SMF is configured to discover a multicast broadcast SMF, MB SMF, for a MBS session, and to authorize a MBS session join operation, if applicable. The SMF is configured to interact with the MB SMF in order to obtain MBS data for individual delivery and in order to manage MBS session content. The SMF is configured to interact with RAN for shared data transmission resource establishment.

A MB SMF is configured to handle a MBS session management, including quality of service, QoS, control. A MB SMF is configured to control transport of MBS flows from a multicast broadcast user plane function, MB UPF, to RAN. A user plane function, UPF, is configured to support features and capabilities to facilitate user plane operation, for example packet routing and forwarding, interconnection to a data network, policy enforcement and data buffering. A MB SMF is configured to arrange MB UPF for multicast broadcast, MB, flows transport based on a local policy or policy rules from a policy control function, PCF, which provides policy rules for control plane functions. A MB SMF is configured to interact with SMF in order to modify a protocol data unit, PDU, session associated with MBS. A MB SMF is configured to interact with a RAN, via AMF and SMF, in order to establish data transmission resources between MB UPF and RAN nodes for 5GC shared MBS traffic delivery method. A MB SMF is configured to control data transport using 5GC individual MBS traffic delivery method.

An AF is configured to provide MBS service information or a request for MBS service from 5GC by providing service information, which may include QoS requirement for 5GC. An AF is configured to negotiate with a NEF for MBS related service exposure. An AF is configured to allocate a temporary mobile group identity, TGMI, and to start a MBS session and MBS transmission. An AF is configured to arrange resources for a MBS session set up in MB UPF and NG RAN for shared MBS delivery. An AF is configured to signal with NG RAN and MB SMF for MBS session management. An AF is configured to select NG RANs for notification of MBS session activation and for broadcast. An AF is configured to signal with NG RAN for NG RAN MBS capability, and to interact with NEF for MBS related service exposure. An AF is authorized by 5GC to deliver MBS data to 5GC and/or to interact with 5GC. For signalling exchange with 5GC, NEF / MB SF are configured to perform authorization to external AF in order to determine, whether interaction of 5GC is allowed or not.

A NEF is configured to provide an interface to AFs for MBS procedures including service provisioning, MBS session- and QoS management. A NEF is configured to interact with AF and MB SMF for MBS session operations, determination of transport parameters and session transport. A NEF is configured to select of serving MB SMF for a MBS session.

A MB SMF is configured to handle packet transport functionalities to any IP multicast enabled application, such as framing, multiple flows, packet forward error correction, FEC, and encoding. A MB SMF is configured to handle MBS delivery of input files as objects or object flows.

UDM is configured to support management of subscriptions for authorization and for MBS sessions. The subscriber profile in the UDM includes subscription information in order to give a subscription for MBS services in the UDM. The subscription for MBS may include allowance to join any multicast service or allowance to join the indicated specific multicast service. The MBS subscription data is provided by the UDM to the SMF during PDU session establishment, as defined for example in TS23.502, using Numd_SDM service for subscription data type "UE context in SMF data". The SMF selection subscription data is provided by the UDM to the AMF as described in TS23.502. A UDR supports management of UE authorization information for MBS session. An UE authorization for multicast services may define, whether a UE is authorized to receive any MBS multicast session data at all, or whether and how a UE is authorized to receive a particular multicast service. If the UE is not authorized to receive MBS session data, the network will not send the data to the UE even if the MBS session is open to any UEs.

A MBS session identifier or identity, ID, is used to identify the MBS session throughout the 5G system, on an interface towards AF, and between AF and UE, and towards UE. The MBS session ID may comprise a source specific IP multicast address for a MBS multicast session, or a temporary mobile group identity, TMGI, for identifying a multicast or a broadcast session. The TMGI is a radio resource configured to identify a MBS bearer service. This may be utilized instead of using IP multicast address and access point name. A TMGI may be allocated by multicast broadcast service center, MB SC, and the TMGI for a specific MBS is provided to a UE during MBS activation procedure. The UE may obtain at least one MBS session ID via MBS service announcement. For a MBS multicast session, a source specific IP multicast address can be assigned by 5GC or an external network. The source specific IP multicast address is used to identify an MBS multicast session and it comprises two IP addresses: one for an IP unicast address used as source address in IP packets for identifying the source of the multicast service, like AF/AS, and the other for an IP multicast address used as destination address in related IP packets for identifying a multicast service associated with the source.

In IoT environment, for example, power of the devices may be saved by keeping the devices in a power saving mode and by waking up the devices to listen to paging at specific times.

In unicast reception, a UE may be in a power saving mode, PSM, where the UE sleeps for indefinite time, after a certain timer expires. The timer has been negotiated with the network via NAS signalling. The times starts when the UE enters into idle mode. The UE exits the PSM once there is UL data to be sent, but it cannot receive DL data or monitor paging while PSM is entered. In case of unicast discontinuous reception, DRX, DRX parameters of the UE are negotiated with the network via NAS signalling. DRX is used on lower levels in order to define active on-times to monitor paging control channel, PCCH, which enables readiness for paging reception. In DRX mode the UE can sleep during inactive off-times. DRX may be in range of milliseconds. In unicast extended DRX, eDRX, an extended idle mode DRX cycle length of the UE is negotiated with the network via NAS signalling. The cycle length of eDRX may be from order of seconds to hours or days. Like legacy DRX, eDRX can be deployed in both RRC idle and connected state.

There is provided method(s) for arranging or facilitating paging of devices for multicast (service) sessions, such as MBS sessions in 3GPP systems. The methods as disclosed herein enables power saving for wireless devices, particularly useful for IoT devices, which may need to receive multicast data together. The methods as disclosed herein facilitate to page large groups of devices, such as IoT devices, while enabling power saving by enabling long periods in sleep mode.

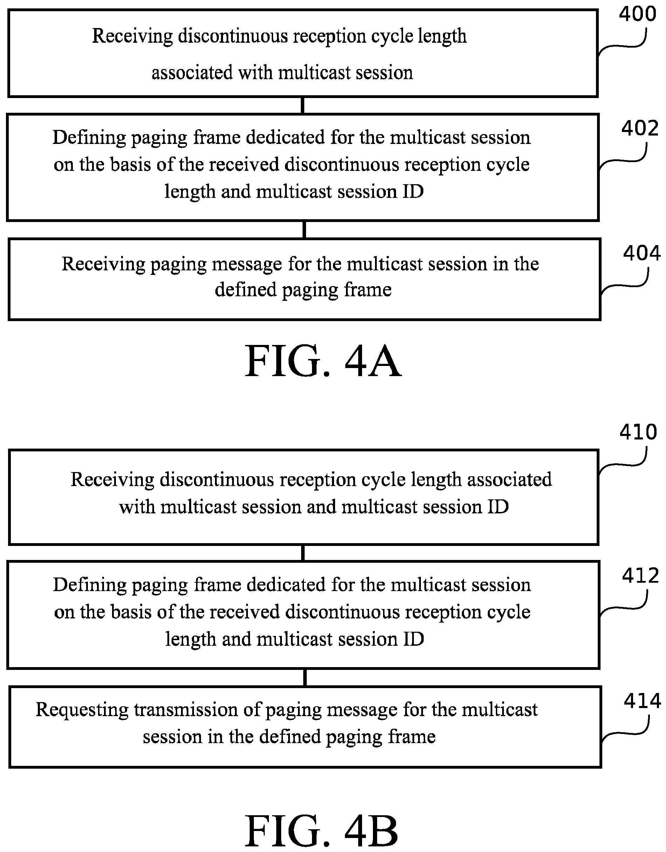

Flowhcarts of the methods are shown in Figures 4a to 4e. In some aspects, a specific paging frame is defined for a multicast (service) session on the basis of discontinuous reception cycle length associated with the multicast session and an identifier of the multicast session, for arranging paging of group(s) of devices to receive multicast data of the multicast session.

The discontinuous reception cycle may generally refer to information of the cycle that the device is asleep, i.e. will not listen for paging or receive data. Receiving or transmitting the discontinuous reception cycle length may refer to receiving or transmitting information of the discontinuous reception cycle length or for defining the discontinuous reception cycle length. One paging frame (PF) may generally refer to one radio frame, which may contain one or multiple paging occasion(s) (PO). In 3GPP systems, PO may refer to the subframe where paging radio network temporary identifier (P-RNTI) may be transmitted on paging control channel (PDCCH) addressing the paging message. When DRX is used, the UE needs only to monitor one PO per DRX cycle. The UE needs to monitor the paging on the PDCCH in the given PF and PO, which corresponds to the SFN and subframe, respectively. In comparison to idle mode DRX, I-DRX, idle-mode eDRX, I-eDRX, has to additionally determine the paging hyperframe (PH).

In some embodiments, the discontinuous reception cycle is an extended discontinuous reception, eDRX, cycle and the paging frame is a paging hyperframe (PH) dedicated for the multicast session, illustrated further below. In the multicast extended DRX, the cycle length of eDRX may be from order of seconds to hours or days. In multicast eDRX mode all UEs participating in a multicast session are reachable for paging related to the multicast session in specific paging hyperframes, PH, which correspond to a specific set of hyper system frame number, H-SFN, values.

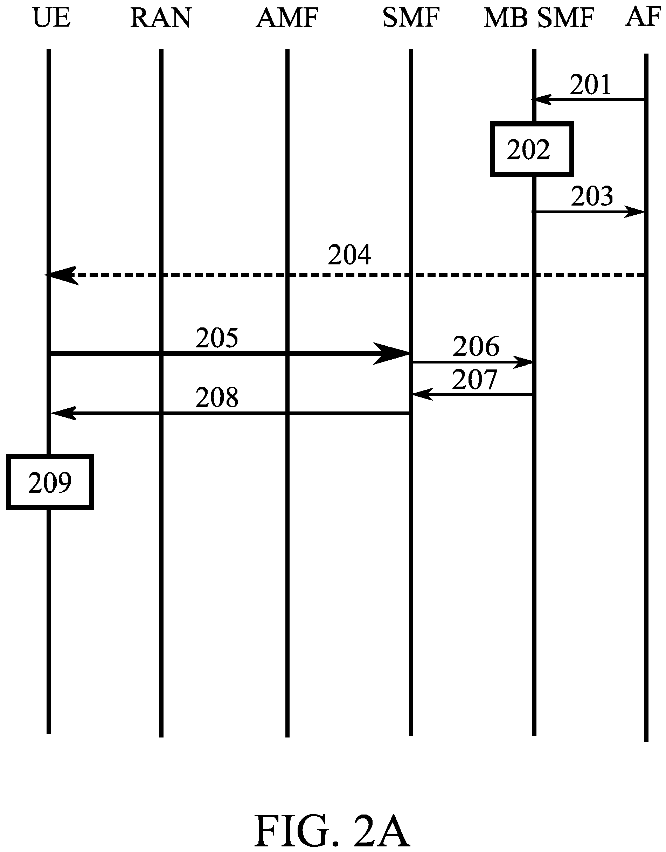

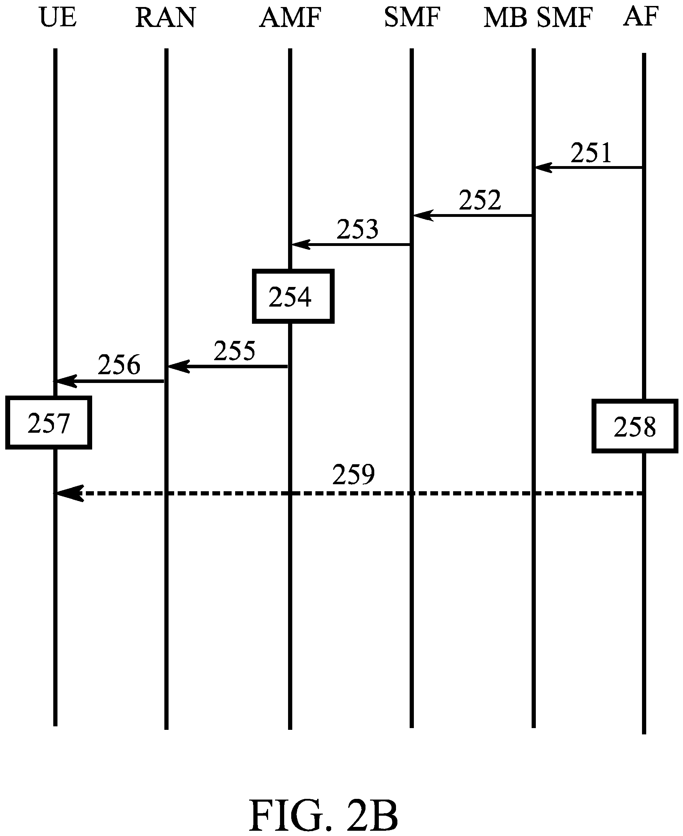

Phases and some embodiments of the methods are further illustrated in the context of 3GPP MBS system signaling examples of Figs. 2A and 2B below, without however limiting application of the features to such systems.

An MBS session is configured in first portion of the example of Fig. 2A. The AF may provide MBS service information or a request for MBS service from 5GC. The AF may negotiate with a NEF for MBS related service exposure. The AF may arrange resources for an MBS session set up in MB UPF and NG RAN for shared MBS delivery. The AF may allocate a TMGI for the MBS session. The AF may signal with NG RAN and MB SMF for MBS session management. The AF may select NG RANs for notification of MBS session activation and for broadcast. The AF may signal with NG RAN for NG RAN MBS capability, and to interact with NEF for MBS related service exposure. An NEF may provide an interface to AFs for MBS procedures including service provisioning, MBS session- and QoS management. The NEF may interact with AF and MB SMF for MBS session operations, determination of transport parameters and session transport. The NEF may select a serving MB SMF for a MBS session.

The AF transmits a configure request 201 to the MB SMF. The configure request may comprise MBS session configuration, including an MBS session ID and information indicative of duration or length of an eDRX cycle for the MBS session, herein referred to as the eDRX cycle length. The request may be sent via NEF or MB SF.

The MB SMF stores 202 the MBS session configuration and the eDRX cycle length in response to receiving the configure request. The MB SMF sends a configure reply 203 to the AF.

The AF sends a service announcement 204 for the MBS session, which is received at least by the UE. The service announcement distributes information on the service and parameters on the service activation. After the service announcement the MBS session may be activated or established in order to enable DL MBS data transfer between the 5GC and the NG-RAN. The session activation may be triggered by a request from the AF.

The service announcement for MBS session may include the MBS session ID and the eDRX cycle length. At this phase the UE may thus be informed of parameters for defining the PH for the MBS session. In some embodiments, the UE may compute the PH based on the MBS session ID and the eDRX cycle length already in response to receiving the service announcement 204 and start to monitor the PH, to listen for paging related to the MBS session. Alternatively, the UE may compute the PH for the MBS session only later, and may also receive and store the parameters for computing the PH, after MBS session join procedure, further illustrated below.

On the basis of the service announcement 204, the UE may decide to join the (announced) MBS session. The UE transmits a PDU session modify message 205 to the SMF. The UE may transmit the request 205 upon waking up from sleep mode, in some embodiment at a wake up time earlier indicated by the network. The PDU session modify message includes the request to join the MBS session. Via the session join request 205 the UE indicates to 5GC that the UE wants to receive MBS data identified by specific MBS session ID. The session join from the UE may trigger transmission resources establishment for the DL MBS data between the 5GC and the NG-RAN. It is to be noted that, in addition to the presently discussed eDRX, the UE may employ other power saving methods. The UE may indicate that it wants to utilize sleep periods. This indication is optional.

The SMF sends a request 206 for information about the MBS session to MB SMF. The SMF is configured to send the request to the MB SMF in response to receiving the join request 205 from the UE.

The MB SMF sends an information response 207 to SMF in response to the request 206. The response may include an indication that eDRX is used for the MBS session and the eDRX cycle length of the MBS session, in addition to other parameters, like QoS parameters and 5G QoS identifier (5QI). The request 206 may be MC QoS Request and the response 207 may be MC QoS Response. At this phase the eDRX cycle length may thus be sent from MB SMF to SMF. Alternatively, the SMF configured to process the session join 205 may receive the information on the eDRX cycle length from a database storing information about the MBS session, which may be UDM/UDR.

The SMF sends, in response to receiving information response from MB SMF, a PDU session modify response 208 to the UE. The PDU session modify response includes join acknowledgement. The join acknowledgement may include an indication that eDRX is used for the MBS session and the eDRX cycle length. Hence, if not received in the service announcement 204, at this phase, in response to sending a PDU session modify message 205 to join the MBS session, the UE receives the eDRX cycle length of the MBS session.

In block 209, the UE computes (if not already done earlier, based on the information received in the service announcement) the PH based on the eDRX cycle length and the MBS session ID and/or starts to monitor the PH, to listen for paging related to the MBS session.

The AMF also receives information of the MBS eDRX cycle length and the multicast session ID for the MBS session, and defines the PH for the MBS session based on the eDRX cycle length and the multicast session ID. These parameters may be received from the SMF or MB SMF. In some embodiments, these parameters are received in a join reply/acknowledgment, which may be included in the message 208, or via a dedicated DRX activation request, the latter option being further illustrated below in connection with Fig. 2B. A newly received eDRX cycle length may override a previously negotiated eDRX cycle length that may have been defined during NAS registration procedure at both UE and AMF.

The UE is thus after block 209 reachable for paging in the PH, which is a specific set of MBS H-SFN values. The PH computation, by the UE and the AMF, may comprise a formula that is function of the idle mode extended DRX cycle length, and the MBS session identifier. In an example embodiment, the PH is the H-SFN satisfying the following equation:

$$H\text{-}SFN \bmod T_{eDRX,H} = (MBSS\_ID\_H \bmod TeDRX,H),$$

where

$T_{eDRX,H}$ is the eDRX cycle length of the MBS session in Hyper-frames, and
$MBSS\_ID\_H$ is the MBS session ID in hashed form.

Within the PH dedicated for the MBS session, the UE monitors the PF and PO in the given PTW. In response to detecting a paging message for the MBS session in the computed PH dedicated for the MBS session, the UE may be triggered to perform actions to activate reception for the MBS session. This may involve sending a service request to the AMF for the MBS session or start to receive MBS data of the MBS session.

The paging message may indicate activation of the multicast session. Upon receiving the paging message, the UE may start listening for (MBS) data, in some embodiments multicast data, of the MBS session. The UE may thus activate reception of data of the MBS session at least for the duration of the eDRX cycle, in accordance with the received eDRX cycle length of the MBS session.

Fig. 2B provides another signalling example illustrating an eDRX activation of an MBS session.

An MBS session may be first configured, by the AF. This may be performed similarly as illustrated above in connection with stages 201 to 204. The eDRX cycle length has been set for the MBS session and the UE has joined the MBS session.

AF transmits a DRX activation request 251, to MB SMF. The activation request may also be considered as and referred to as paging or paging activation request. The DRX activation request may be sent via NEF, and/or multicast broadcast service function, MBSF. The DRX activation request comprises at least MBS session identifier, but may also comprise other information or indications. For example, the DRX activation request may indicate activation time(s) when the transmission of MBS data starts. The DRX activation request received by the AMF may also comprise the eDRX cycle length and a list of UE identifiers. Identifiers of UEs served by the SMF and associated with the session may be included, or only such idle UEs may be identified.

The MB SMF transmits the DRX activation request 252 to SMF(s) handling UEs in the MBS session. Each such SMF sends the DRX activation request 253 in turn to AMF(s) that serve at least one UE that joined the multicast session and are handled by the SMF.

If not already done, the AMF computes in block 254 the eDRX PH for the MBS session based on the eDRX cycle length and the MBS service ID as illustrated above. The AMF computes an area for the multicast session paging by the tracking areas of all UEs in the received UE list.

The AMF transmits a request 255 to RAN node(s) within the computed multicast session paging area to transmit a paging request 256 for the multicast session using the computed eDRX PH. If an activation time is received, the AMF sends the request before this activation time. In response to the request 255, the RAN transmits the paging message 256 in PH dedicated to the MBS session.The AMF may thus indicate the activation of the MBS session using the MBS PH. The MBS session ID may be indicated in the MBS PH or be implied by the used MBS PH.

In block 257, the UE starts to wait for the duration of the eDRX cycle to receive data 259 of the MBS session. This means that the first MBS data may arrive with up to an eDRX cycle of delay, and the UE continues to listen for MBS data and remains in CONNECTED state during that period. The AF waits in block 258 for the eDRX cycle length before transmitting data of the MBS data. The AF then causes transmitting the data of the MBS session 259 for the UE via the serving network (after elapse of the eDRX cycle). The wait time serves the purpose of ensuring that all UEs in the MBS session have been paged and listen to MBS data when the AF start the transmission.

The UE may be configured to apply also unicast DRX or eDRX procedure individual for the UE. Thus, there may be a MBS DRX cycle for the MBS session, and another eDRX cycle individual for the UE. The paging for the MBS session would thus follow the MBS DRX cycle, and the individual UE paging for the UE due to incoming unicast data would follow the UE eDRX cycle.

In addition to PSM, DRX or eDRX, there may be enabled a power saving mode, which is interrupted at indicated, predefined wake up times. The wake up times as provided may be used in addition to or alternatively to the PSM, DRX and/or eDRX This enables all IoT devices to wake up at the same time for reception of paging request for an MBS session. This way periods of inactivity or sleep of the IoT devices may be optimized, which enables power saving.

MBS service and session may be provided in one or several MBS service areas. An MBS service area may be identified by a cell list or a tracking area list. Only UEs within the MBS service area may receive content data, while UEs outside the MBS service area are not allowed to receive location specific content. For multicast, UEs outside the MBS service are not allowed to join the MBS service. The network does not deliver location specific content to any UE moved out of the MBS service area. The UE may obtain service area information of the local multicast service via MBS service announcement or via NAS signalling, wherein during UE session join messaging a reply of accepting or rejecting includes cell list or a tracking area list. A location dependent MBS comprises local MBS in several MBS areas. The same MBS session ID and different area session ID are used for each MBS service area in a location dependent MBS. The area session ID may be allocated by MB SMF and used in combination with MBS session ID. The UEs may not be aware of the area session ID, but only on the MBS session ID. The location dependent MBS enables distribution of different content data to different MBS areas.

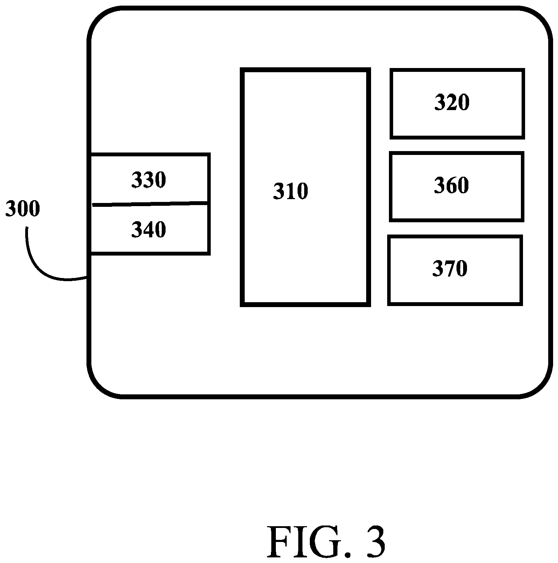

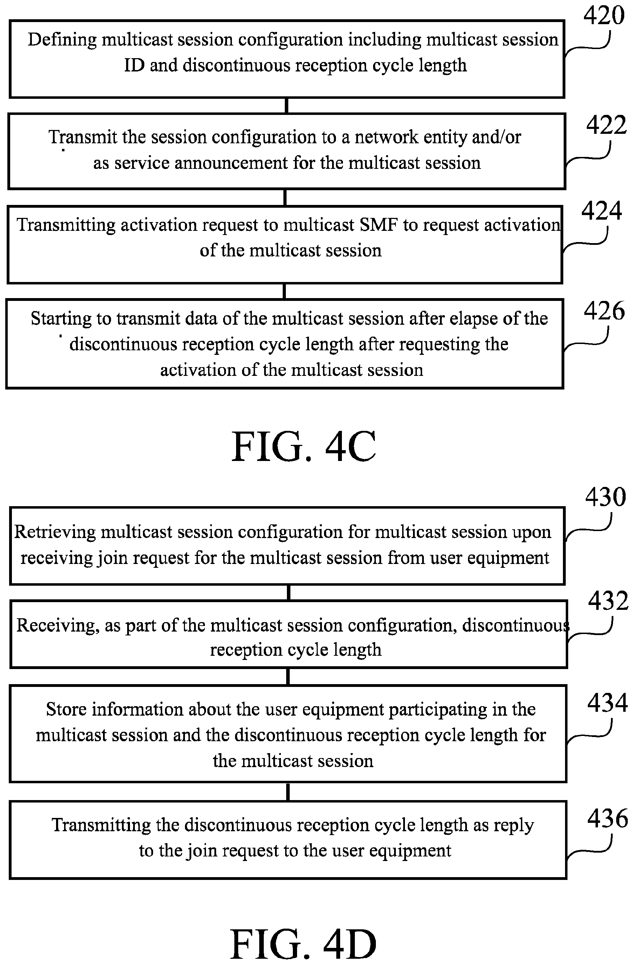

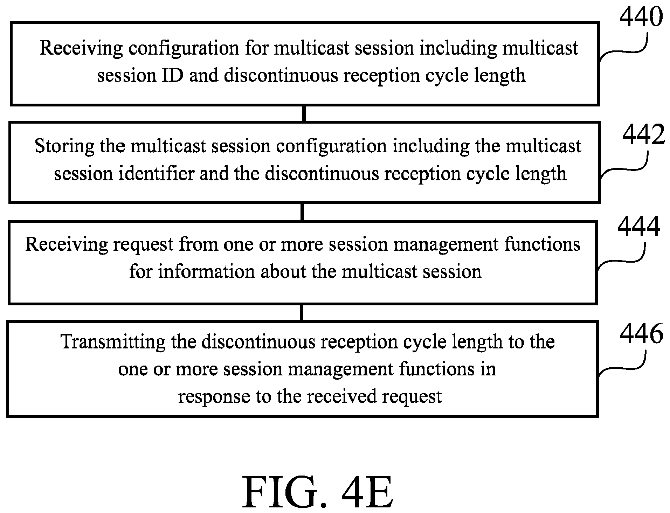

Fig. 3 shows, by way of example, an apparatus capable of performing the method(s) as discloses herein. Illustrated is device 300, which may comprise, for example, a mobile communication device such as the UE 10 of Fig. 1 or UE of Figs. 2A and 2B and performing the method of Fig. 4A, or a network entity or network function such as AMF, AF, SMF, or MB SMF configured to perform the method of Fig 4B, 4C, 4D, or 4E, respectively. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. A processing core may comprise, for example, a Cortex-A8 processing core manufactured by ARM Holdings or a Steamroller processing core designed by Advanced Micro Devices Corporation. Processor 310 may comprise at least one Qualcomm Snapdragon and/or Intel Atom processor. Processor 310 may comprise at least one application-specific integrated circuit, ASIC. Processor 310 may comprise at least one field-programmable gate array, FPGA. Processor 310 may be means for performing method steps in device 300. Processor 310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with global system for mobile communication, GSM, wideband code division multiple access, WCDMA, 5G, long term evolution, LTE, wireless local area network, WLAN, and/or Ethernet, for example.

Device 300 may comprise a near-field communication, NFC, transceiver 350. NFC transceiver 350 may support at least one NFC technology, such as NFC, Bluetooth, Wibree or similar technologies.

Device 300 may comprise user interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to manage digital files stored in memory 320 or on a cloud accessible via transmitter 330 and receiver 340, or via NFC transceiver 350, and/or to control parameters affecting operation of the device.

Device 300 may comprise or be arranged to accept a user identity module 370. User identity module 370 may comprise, for example, a subscriber identity module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in Fig. 3. For example, where device 300 comprises a smartphone, it may comprise at least one digital camera or a fingerprint sensor. In some example embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected.

Fig. 4A is a flow graph of a method in accordance with at least some embodiments. The phases of the illustrated method may be performed in an apparatus such as a UE, for example, wherein the UE may comprise means for performing the method, or in a control device configured to control the functioning thereof, when installed therein. Block 400 comprises receiving discontinuous reception cycle length associated with a multicast session. Block 402 comprises defining a paging frame dedicated for the multicast session on the basis of the received discontinuous reception cycle length and an identifier of the multicast session. Block 404 comprises receiving a paging message for the multicast session in the defined paging frame.

The method may further comprise starting reception of multicast data of the multicast session at least for the duration of a discontinuous reception cycle in accordance with the discontinuous reception cycle length in response to receiving the paging message, which indicates activation of the multicast session. The method may further comprise transmitting, to a session management function entity, a join request, e.g. request 205 to join the multicast session, and receiving a join reply, e.g. in message 208, comprising the discontinuous reception cycle length. The method may further comprise receiving the discontinuous reception cycle length in a session configuration in a service announcement, e.g. announcement 204 for the multicast session.

Fig. 4B is a flow graph of a method in accordance with at least some embodiments. The phases of the illustrated method may be performed in an apparatus such as an AMF apparatus, for example, wherein the apparatus may comprise means for performing the method, or in a control device configured to control the functioning thereof, when installed therein. Block 410 comprises receiving discontinuous reception cycle length associated with a multicast session and an identifier of the multicast session. Block 412 comprises defining a paging frame dedicated for the multicast session on the basis of the received discontinuous reception cycle length and the received identifier of the multicast session. Block 414 comprises requesting transmission of a paging message for the multicast session in the defined paging frame. The method may further comprise receiving a discontinuous reception activation request from an SMF and transmitting the paging message in response to the discontinuous reception activation request. The discontinuous reception activation request may comprise the identifier of the multicast session; the discontinuous reception cycle length; and one or more user equipment identifiers. The method may further comprise defining the paging frame as a function of the discontinuous reception cycle length and an identifier of the multicast session. The paging frame may be defined 402, 412 as a function of the discontinuous reception cycle length and the identifier of the multicast session.

Fig. 4C is a flow graph of a method in accordance with at least some embodiments. The phases of the illustrated method may be performed in an apparatus such as an AF apparatus, for example, wherein the apparatus may comprise means for performing the method, or in a control device configured to control the functioning thereof, when installed therein. Block 420 comprises defining a multicast session configuration including a multicast session identifier and discontinuous reception cycle length. Block 422 comprises transmitting the session configuration to a network entity and/or as a service announcement for the multicast session. Block 424 comprises transmitting an activation request to a multicast SMF to request activation of the multicast session, Block 426 comprises starting to transmit data of the multicast session after elapse of the discontinuous reception cycle length after requesting the activation of the multicast session.

Fig. 4D is a flow graph of a method in accordance with at least some embodiments. The phases of the illustrated method may be performed in an apparatus such as an SMF apparatus, for example, wherein the apparatus may comprise means for performing the method, or in a control device configured to control the functioning thereof, when installed therein. Block 430 comprises retrieving a multicast session configuration for a multicast session upon receiving a join request for the multicast session from a user equipment. Block 432 comprises receiving, as part of the multicast session configuration, a discontinuous reception cycle length. Block 434 comprises storing information about the user equipment participating in the multicast session and the discontinuous reception cycle length for the multicast session. Block 436 comprises transmitting the discontinuous reception cycle length as a reply to the join request to the user equipment. The method may further comprise receiving a first discontinuous reception activation request for the multicast session; determining at least one user equipment affected by the multicast session based on the stored information indicative of at least one user equipment participating in the multicast service session, and transmitting, to each AMF serving at least one of the determined at least one user equipment, at least one second discontinuous reception activation request. The discontinuous reception activation request may comprises the multicast session identifier, the stored discontinuous reception cycle length, and one or more user equipment identifiers.

Fig. 4E is a flow graph of a method in accordance with at least some embodiments. The phases of the illustrated method may be performed in an apparatus such as a multicast SMF apparatus, for example, wherein the apparatus may comprise means for performing the method, or in a control device configured to control the functioning thereof, when installed therein. Block 440 comprises receiving a multicast session configuration including a multicast session identifier and discontinuous reception cycle length. Block 442 comprises storing the multicast session configuration including the multicast session identifier and the discontinuous reception cycle length. Block 444 comprises receiving a request from one or more session management functions for information about the multicast session. Block 446 comprises transmitting the discontinuous reception cycle length to the one or more session management functions in response to the received request. The method may further comprise receiving an activation request, e.g. by message 251, for the multicast session from an application function, and notifying each of the one or more session management functions about the activation of the multicast session.

In some embodiments of the above methods, the discontinuous reception cycle is an extended discontinuous reception, eDRX, cycle and the paging frame is a paging hyperframe dedicated for the multicast session. The multicast session may be a multicast MBS session of a 3GPP MBS system. The multicast session management function may be an MB SMF of a 3GPP MBS system.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

At least some embodiments of the present invention find industrial application in implementation of a power saving mode.

## Claims

1. An apparatus comprising means for:

   - receiving discontinuous reception cycle length associated with a multicast session,
   - defining a paging frame dedicated for the multicast session on the basis of the received discontinuous reception cycle length and an identifier of the multicast session, and
   - receiving a paging message for the multicast session in the defined paging frame.

2. The apparatus of claim 1, comprising means for starting reception of multicast data of the multicast session at least for the duration of a discontinuous reception cycle in accordance with the discontinuous reception cycle length in response to receiving the paging message, which indicates activation of the multicast session.

3. The apparatus of any preceding claim, comprising means for:

   - transmitting, to a session management function entity, a join request to join the multicast session, and
   - receiving a join reply comprising the discontinuous reception cycle length.

4. The apparatus of any preceding claim, wherein the means are configured to receive the discontinuous reception cycle length in a session configuration in a service announcement for the multicast session.

5. An apparatus including an access and mobility management function, comprising means for:

   - receiving discontinuous reception cycle length associated with a multicast session and an identifier of the multicast session,
   - defining a paging frame dedicated for the multicast session on the basis of the received discontinuous reception cycle length and the received identifier of the multicast session, and
   - requesting transmission of a paging message for the multicast session in the defined paging frame.

6. The apparatus of claim 5, comprising means for receiving a discontinuous reception activation request from a session management function and transmitting the paging message in response to the discontinuous reception activation request.

7. The apparatus of claim 6, wherein the discontinuous reception activation request comprises:

   - the identifier of the multicast session;
   - the discontinuous reception cycle length; and
   - one or more user equipment identifiers.

8. The apparatus of any preceding claim, wherein the means are configured to define the paging frame as a function of the discontinuous reception cycle length and the identifier of the multicast session.

9. An apparatus including an application function, comprising means for:

   - defining a multicast session configuration including an multicast session identifier and discontinuous reception cycle length,
- transmitting the session configuration to a network entity and/or as a service announcement for the multicast session,
- transmitting an activation request to a multicast session management function to request activation of the multicast session, and
- starting to transmit data of the multicast session after elapse of the discontinuous reception cycle length after requesting the activation of the multicast session.

10. An apparatus including a session management function, comprising means for:

- retrieving a multicast session configuration for a multicast session upon receiving a join request for the multicast session from a user equipment,
- receiving, as part of the multicast session configuration, a discontinuous reception cycle length,
- storing information about the user equipment participating in the multicast session and the discontinuous reception cycle length for the multicast session, and
- transmitting the discontinuous reception cycle length as a reply to the join request to the user equipment.

11. The apparatus of claim 10, wherein the apparatus comprises means for:

- receiving a first discontinuous reception activation request for the multicast session,
- determining at least one user equipment affected by the multicast session based on the stored information indicative of at least one user equipment participating in the multicast service session,
- transmitting, to each access and mobility management function, serving at least one of the determined at least one user equipment, at least one second discontinuous reception activation request, wherein the discontinuous reception activation request comprises the multicast session identifier, the stored discontinuous reception cycle length, and one or more user equipment identifiers.

12. An apparatus including a multicast session management function comprising means for:

- receiving a multicast session configuration including a multicast session identifier and discontinuous reception cycle length,
- storing the multicast session configuration including the multicast session identifier and the discontinuous reception cycle length,
- receiving a request from one or more session management functions for information about the multicast session, and
- transmitting the discontinuous reception cycle length to the one or more session management functions in response to the received request.

13. The apparatus of claim 12, comprising means for:

- receiving an activation request for the multicast session from an application function, and
- notifying each of the one or more session management functions about the activation of the multicast session.

14. The apparatus of any preceding claim, wherein the discontinuous reception cycle is an extended discontinuous reception, eDRX, cycle and the paging frame is a paging hyperframe dedicated for the multicast session, and/or the multicast session is a Multicast/Broadcast Service session.

15. A method for a communications apparatus, comprising one of:

- receiving discontinuous reception cycle length associated with a multicast session,
- defining a paging frame dedicated for the multicast session on the basis of the received discontinuous reception cycle length and an identifier of the multicast session, and
- receiving a paging message for the multicast session in the defined paging frame, or
- receiving discontinuous reception cycle length associated with a multicast session and an identifier of the multicast session,
- defining a paging frame dedicated for the multicast session on the basis of the received discontinuous reception cycle length and the received identifier of the multicast session, and
- requesting transmission of a paging message for the multicast session in the defined paging frame,

or

- defining a multicast session configuration including a multicast session identifier and discontinuous reception cycle length,

- transmitting the session configuration to a network entity and/or as a service announcement for the multicast session,

- transmitting an activation request to a multicast session management function to request activation of the multicast session, and

- starting to transmit data of the multicast session after elapse of the discontinuous reception cycle length after requesting the activation of the multicast session,

or

- retrieving a multicast session configuration for an multicast session upon receiving a join request for the multicast session from a user equipment,

- receiving, as part of the multicast session configuration, a discontinuous reception cycle length,

- storing information about the user equipment participating in the multicast session and the discontinuous reception cycle length for the multicast session, and

- transmitting the discontinuous reception cycle length as a reply to the join request to the user equipment,

or

- receiving a multicast session configuration including a multicast session identifier and discontinuous reception cycle length,

- storing the multicast session configuration including the multicast session identifier and the discontinuous reception cycle length,

- receiving a request from one or more session management functions for information about the multicast session, and

- transmitting the discontinuous reception cycle length to the one or more session management functions in response to the received request.

FIG. 1

FIG. 2A

FIG. 2B

**FIG. 3**

Receiving discontinuous reception cycle length associated with multicast session — 400

Defining paging frame dedicated for the multicast session on the basis of the received discontinuous reception cycle length and multicast session ID — 402

Receiving paging message for the multicast session in the defined paging frame — 404

# FIG. 4A

Receiving discontinuous reception cycle length associated with multicast session and multicast session ID — 410

Defining paging frame dedicated for the multicast session on the basis of the received discontinuous reception cycle length and multicast session ID — 412

Requesting transmission of paging message for the multicast session in the defined paging frame — 414

# FIG. 4B

Defining multicast session configuration including multicast session ID and discontinuous reception cycle length

420

Transmit the session configuration to a network entity and/or as service announcement for the multicast session

422

Transmitting activation request to multicast SMF to request activation of the multicast session

424

Starting to transmit data of the multicast session after elapse of the discontinuous reception cycle length after requesting the activation of the multicast session

426

# FIG. 4C

Retrieving multicast session configuration for multicast session upon receiving join request for the multicast session from user equipment

430

Receiving, as part of the multicast session configuration, discontinuous reception cycle length

432

Store information about the user equipment participating in the multicast session and the discontinuous reception cycle length for the multicast session

434

Transmitting the discontinuous reception cycle length as reply to the join request to the user equipment

436

# FIG. 4D

440

Receiving configuration for multicast session including multicast session ID and discontinuous reception cycle length

442

Storing the multicast session configuration including the multicast session identifier and the discontinuous reception cycle length

444

Receiving request from one or more session management functions for information about the multicast session

446

Transmitting the discontinuous reception cycle length to the one or more session management functions in response to the received request

# FIG. 4E

**EUROPEAN SEARCH REPORT**

Europäisches Patentamt
European Patent Office
Office européen des brevets

Application Number

EP 21 19 0969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | QUALCOMM INC: "NR Multicast group paging aspects", 3GPP DRAFT; R2-2105018, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. E-Meeting; 20210519 - 20210528 11 May 2021 (2021-05-11), XP052006737, Retrieved from the Internet: URL:https://ftp.3gpp.org/tsg_ran/WG2_RL2/TSGR2_114-e/Docs/R2-2105018.zip R2-2105018_NR Multicast group paging _v1.doc [retrieved on 2021-05-11] * page 1 - page 7 * ----- | 1-15 | INV. H04W68/00 ADD. H04W76/28 |
| X | HUAWEI ET AL: "Support of group notification", 3GPP DRAFT; R2-2105577, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. E-meeting; 20210519 - 20210527 11 May 2021 (2021-05-11), XP052007155, Retrieved from the Internet: URL:https://ftp.3gpp.org/tsg_ran/WG2_RL2/TSGR2_114-e/Docs/R2-2105577.zip R2-2105577_support_of_group_notification.docx [retrieved on 2021-05-11] * page 1 - page 5 * ----- -/-- | 1-15 | |

TECHNICAL FIELDS SEARCHED (IPC)

H04W

The present search report has been drawn up for all claims

| Place of search | Date of completion of the search | Examiner |
|---|---|---|
| Berlin | 30 December 2021 | Carrasco Comes, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
......................................................................
& : member of the same patent family, corresponding document

EPO FORM 1503 03.82 (P04C01)

page 1 of 2

**EP 4 135 430 A1**

Europäisches
Patentamt

European
Patent Office

Office européen
des brevets

# EUROPEAN SEARCH REPORT

Application Number

EP 21 19 0969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI ET AL: "Notifications for Multicast and Broadcast", 3GPP DRAFT; R2-2108202, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. E-meeting; 20210809 – 20210827 6 August 2021 (2021-08-06), XP052034686, Retrieved from the Internet: URL:https://ftp.3gpp.org/tsg_ran/WG2_RL2/T SGR2_115-e/Docs/R2-2108202.zip R2-2108202_Notifications_for_Multicast_and _Broadcast.docx [retrieved on 2021-08-06] * page 1 – page 5 * ----- | 1-15 | |
| A | LENOVO ET AL: "Discussion on Idle and Inactive mode UEs", 3GPP DRAFT; R2-2105835, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Online; 20210519 – 20210527 11 May 2021 (2021-05-11), XP052007312, Retrieved from the Internet: URL:https://ftp.3gpp.org/tsg_ran/WG2_RL2/T SGR2_114-e/Docs/R2-2105835.zip R2-2105835 Discussion on Idle and Inactive mode UEs.docx [retrieved on 2021-05-11] * page 1 – page 4 * ----- | 1-15 | TECHNICAL FIELDS SEARCHED (IPC) |

The present search report has been drawn up for all claims

| Place of search | Date of completion of the search | Examiner |
|---|---|---|
| Berlin | 30 December 2021 | Carrasco Comes, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)